## Europäisches Patentamt
## European Patent Office
## Office européen des brevets

(11) Numéro de publication: **0 210 088**
**B1**

(12) **FASCICULE DE BREVET EUROPEEN**

(45) Date de publication du fascicule du brevet: **26.09.90**

(51) Int. Cl.⁵: **G 02 B 27/00,** G 03 B 21/00

(21) Numéro de dépôt: **86401310.7**

(22) Date de dépôt: **17.06.86**

(54) **Appareil de visualisation à champ étendu dans lequel l'image est formée par la juxtaposition d'au moins deux images partielles.**

(30) Priorité: **12.07.85 FR 8510725**

(43) Date de publication de la demande:
**28.01.87 Bulletin 87/05**

(45) Mention de la délivrance du brevet:
**26.09.90 Bulletin 90/39**

(84) Etats contractants désignés:
**DE GB IT**

(56) Documents cités:
**DE-A-1 932 325**
**DE-A-3 033 209**
**FR-A-2 373 112**
**FR-A-2 552 397**
**GB-A-1 602 373**
**US-A-4 439 157**

(73) Titulaire: **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur: **Loiseaux, Didier**
**4, Résidence de Chevreuse**
**F-91400 Rosay (FR)**

(74) Mandataire: **Marquer, Francis et al**
**Cabinet Moutard 35, Avenue Victor Hugo**
**F-78960 Voisins le Bretonneux (FR)**

Courier Press, Leamington Spa, England.

# Description

La présente invention concerne un appareil de visualisation à champ étendu dans lequel l'image est formée par la juxtaposition d'au moins deux images partielles obtenues à l'aide de deux dispositifs de projection respectifs.

Elle s'applique notamment, mais non exclusivement, à la réalisation d'instruments de visualisation de type tête haute destinés à l'équipement de cabines de pilotage d'aérodynes, par exemple des avions ou des hélicoptères.

D'une manière générale, on sait que ces instruments de visualisation sont conçus de manière à permettre au pilote la visualisation des informations utiles à l'accomplissement de sa mission et plus particulièrement aux informations de pilotage sans interrompre sa vision à l'extérieur.

Dans l'état actuel de la technique, ces instruments font habituellement intervenir un montage optique permettant de projeter à l'infini, sur un écran mélangeur optique situé dans le champ de vision du pilote ou même éventuellement sur le pare-brise, une image lumineuse engendrée sur un organe de formation d'une image.

Cet organe de formation d'une image peut avantageusement comprendre une source de rayonnement laser émettant sur un écran en verre dépoli par l'intermédiaire d'un modulateur et de deux déflecteurs opto-électroniques à action croisée. La commande de ce modulateur et de ces deux déflecteurs est alors assurée par un générateur de symboles couplé à un processeur.

Dans ce cas, l'écran peut alors consister en un mélangeur holographique éventuellement incorporé au pare-brise de l'aérodyne.

Or, il s'avère qu'à l'heure actuelle, la couverture de champ de ces dispositifs de visualisation est limitée (30° gisement, 20° site) et ne peut pas être étendue, notamment pour des raisons:

—mécaniques (rigidité-harmonisation),

—optiques (qualité d'image-aberrations),

—technologies (réalisation d'hologrammes de très grandes dimensions).

L'invention a donc tout d'abord pour but de supprimer cet inconvénient. Elle propose de réaliser, d'une façon analogue à celle qui se trouve décrite dans le brevet FR 2 552 397, une image continue par juxtaposition dans le champ de vision du pilote de deux images partielles projetées sur un ou plusieurs écrans, au moyen d'au moins deux dispositifs de projection respectifs.

Une telle approche nécessite de résoudre le problème de la continuité de l'image à la jonction des deux images partielles.

En effet, outre les problèmes d'aberration dont sont sujettes les zones périphériques de l'image, la moindre variation d'orientation des dispositifs de projection et/ou de l'écran peut provoquer une discontinuité importante de l'image au niveau de la susdite jonction.

Ces problèmes se trouvent résolus par l'appareil selon l'invention qui comprend:

—au moins deux ensembles opto-électroniques commandés par au moins un générateur de symboles électronique, de manière à engendrer deux images partielles respectives, sensiblement complémentaires, de l'image que l'on désire obtenir; et

—au moins deux dispositifs de projection respectivement associés auxdits ensembles, ces deux dispositifs étant agencés de manière à projeter jointivement sur au moins un écran les deux images partielles en vue de recréer sur cet écran l'image complète que l'on désire obtenir;

ledit appareil étant caractérisé en ce qu'il comprend en plus:

—au moins deux dispositifs de détection de la position relative et/ou de l'orientation des deux dispositifs de projection par rapport à l'écran; et

—un processeur agissant sur le générateur de symboles pour corriger en temps réel les images partielles en fonction des informations délivrées par lesdits dispositifs de détection.

Il convient de noter que l'appareil précédemment décrit peut comprendre deux écrans respectivement associés aux deux dispositifs de projection, ces deux écrans étant alors agencés de manière à ce que les deux images partielles apparaissent jointivement dans le champ de vision de l'observateur, par exemple du pilote.

Par ailleurs, les susdits dispositif de détection peuvent comprendre chacun une source de rayonnement solidiare de la structure du dispositif de projection et apte à émettre sur l'écran un faisceau rectiligne et un réflecteur, solidaire de l'écran, agencé de manière à réfléchir le faisceau sur la plage sensible d'un récepteur conçu de manière à fournir une information relative à la position dudit faisceau sur ladite plage sensible.

Bien entendu, l'invention ne se limite pas à un appareil permettant d'obtenir un image complète par juxtaposition de deux images partielles.

En effet, l'image complète pourrait être obtenur par juxtaposition d'un nombre plus important d'images partielles. Il est clair que, dans ce cas, l'appareil devra comprendre autant d'ensembles opto-électroniques de dispositifs de projection et de dispositifs de détection, qu'il y a d'images partielles.

De même, cet appareil pourra comprendre un nombre d'écrans égal à celui des images partielles projetées. Ces écrans pourront alors être jointifs ou même décalés dans le champ de vision de l'observateur.

Selon un mode d'exécution particulièrement avantageux de l'invention, les susdits ensembles opto-électroniques comprennent chacun, pour la formation des images partielles, une source de rayonnement laser qui émet sur un élément diffusant par l'intermédiaire d'un système opto-électronique comprenant un modulateur et deux déflecteurs optiques croisés électriquement commandables pilotés par le générateur de symboles. Dans ce cas, les écrans sur lesquels sont projetées les images partielles peuvent consister en des mélangeurs holographiques et les réflecteurs associés aux susdits détecteurs peuvent alors consister en des réflecteurs holographiques réalisés sur les susdits mélangeurs. Ces réflecteurs peuvent être agencés pour réfléchir sur la plage sensible du susdit récepteur des faisceaux émis par des sources de rayonnement laser additionnelles ou même une fraction des faisceaux émis par les susdits ensembles opto-électroniques.

Selon un autre mode d'exécution avantageux de l'invention, l'appareil est agencé de manière à réaliser une image par juxtaposition de trois images partielles réalisées sur trois mélangeurs holographiques respectifs, à savoir: un mélangeur central et deux mélangeurs latéraux, au moyen de trois ensembles optiques comprenant chacun une source de rayonnement laser, un modulateur, deux déflecteurs optiques croisés et un élément diffusant. Dans ce cas, les dispositifs de projection associés aux deux mélangeurs latéraux sont réglés de manière à ce que leurs axes optiques passent respectivement dans les deux yeux de l'observateur, tandis que le dispositif de projection affecté au mélangeur central est réglé de manière à ce que son axe optique passe par le point médian du segment reliant les deux yeux (position de l'oeil cyclope).

Des modes de réalisation de l'invention seront décrits ci-après, à titre d'exemples non limitatifs, avec référence aux dessins annexés dans lesquels:

La figure 1 est une vue schématique, en perspective, d'un appareil de visualisation au moyen duquel l'image que l'on désire obtenir est formée par la juxtaposition de deux images partielles;

La figure 2 est un schéma de principe d'un dispositif permettant d'engendrer une image partielle au moyen d'une source de rayonnement laser et d'un mélangeur holographique;

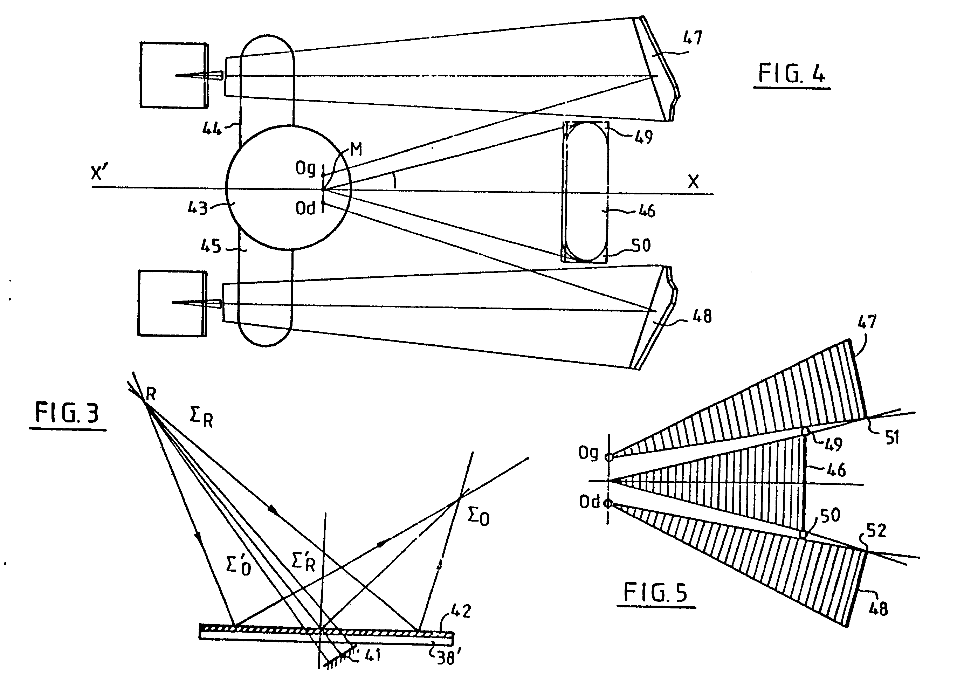

La figure 3 est un schéma théorique illustrant un mode d'obtention d'un réflecteur holographique lors de la réalisation du mélangeur holographique;

La figure 4 est une vue schématique de dessus d'un viseur tête haute à champ étendu équipant le poste de pilotage d'un avion, ce viseur utilisant trois mélangeurs holographiques agencés de manière à obtenir la juxtaposition de trois images partielles;

La figure 5 est un schéma optique montrant la disposition des montants latéraux du mélangeur holographique central dans des zones aveugles du champ de vision du pilote;

Les figures 6 et 7 montrent, respectivement, l'image d'un terrain synthétique engendré sur le mélangeur central d'un viseur tête haute classique (figure 6) et une image analogue formée par la juxtaposition de trois images partielles engendrées sur un mélangeur central et sur deux mélangeurs latéraux, dans un appareil de visualisation selon l'invention (figure 7).

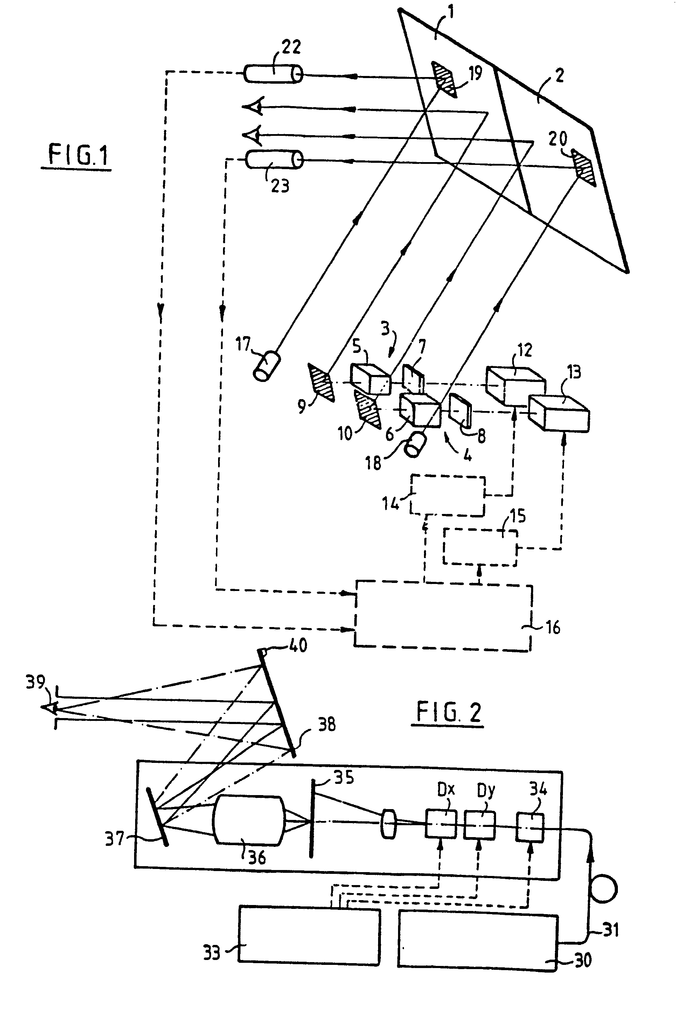

L'appareil représenté sur la figure 1 est conçu de manière à réaliser une image continue par juxtaposition de deux images partielles projectées sur deux écrans jointifs 1, 2 (ou éventuellement sur un même écran) au moyen de deux dispositifs de projection respectifs 3, 4.

Chacun de ces dispositifs de projection comprend un dispositif optique 5, 6 apte à réaliser une image intermédiaire à partir de celle obtenue sur un élément diffusant 7, 8 tel qu'un verre dépoli. Dans cet exemple, le faisceau lumineux émis par ce dispositif de projection 3, 4 est réfléchi sur un écran 1, 2 correspondant au moyen d'un miroir 9, 10.

L'élément diffusant 7, 8, sur lequel est formée l'image peut, par exemple, consister en l'écran d'un tube cathodique piloté par un générateur de symboles lui-même relié à un processeur.

Toutefois, selon un mode d'exécution particulièrement avantageux de l'invention, le dispositif de formation des images peut comprendre, comme représenté, une source lumineuse 12, 13, émettant un rayonnement linéaire dirigé sur l'élément diffusant 7, 8, et dont l'orientation est commandée par un générateur de symboles 14, 15 piloté par un processeur 16, de manière à réaliser les images souhaitées par un balayage approprié de l'élément diffusant 7, 8. Un tel dispositif sera décrit plus en détail à propos de la figure 2.

Par ailleurs, dans cet exemple, la continuité, au niveau du raccordement des deux images partielles projectées sur les deux écrans 1, 2, est obtenue au moyen de deux dispositifs de correction comprenant chacun une source de rayonnement 17, 18 émettant un faisceau rectiligne sur un élément réflecteur 19, 20 prévu sur un écran 1, 2 correspondant, et un détecteur opto-électronique 22, 23 dont la face sensible est placée dans le trajet du faisceau réfléchi par ledit réflecteur 19, 20, et des moyens permettant de fournir un signal électrique représentatif de la position de ce faisceau réfléchi sur ladite face sensible.

Ainsi, dans le cas où la source de rayonnement 17, 18 est solidaire de la structure du dispositif de projection 3, 4, le signal émis par le détecteur 22, 23 sera représentatif de l'orientation relative de l'écran 1, 2 par rapport au dispositif de projection 3, 4.

Ce signal est alors transmis au processeur 16 qui, en fonction de la position détectée, déterminera les corrections que doit effectuer le générateur de symboles 14, 15 pour permettre un raccordement exempt de discontinuité des deux images partielles projectées sur les deux écrans 1, 2.

Il convient de noter que la susdite source de rayonnement 17, 18 peut consister en la source lumineuse 12, 13 servant à la formation des images partielles sur l'élément diffusant 7, 8. Dans ce cas, le générateur de symboles 14, 15 devra être conçu de manière à ce que la source lumineuse 12, 13 émette périodiquement un rayon lumineux sur le miroir 19, 20 affecté à l'écran 1, 2 correspondant.

Dans l'exemple représenté sur la figure 2, la source lumineuse servant à la formation des images partielles, consiste en un générateur de rayonnement laser 30 qui émet un faisceau rectiligne dans l'axe d'un dispositif de balayage optique, par l'intermédiaire d'une liaison à fibres optiques 31.

Ce dispositif de balayage optique comprend, pilotés par un générateur de symboles 33, un modulateur optique 34 et deux déflecteurs croisés Dx, Dy. Le faisceau lumineux émis par ce dispositif de balayage est orienté sur un dépoli 35 sur lequel se forme l'image lumineuse (partielle) élaborée par le générateur de symboles 30. La position de l'image sur le dépoli peut être détectée au moyen d'un dispositif de détection rebouclé sur le générateur de symboles.

Cette image partielle est ensuite projetée (dispositif de projection 36, miroir 37) sur un mélangeur holographique 38 (c'est-à-dire un écran transparent sur lequel on a enregistré un hologramme) qui joue un rôle similaire à celui des écrans 1, 2 précédemment mentionnés, à la différence que l'opérateur dont on n'a représenté qu'un oeil 39, aporgoit alors l'image se dessiner en superposition des éléments extérieures qu'il voit au travers du mélangeur 38.

Pour permettre à l'opérateur d'avoir un champ total de vision de l'image, l'appareil est agencé de manière à ce que son oeil 39 soit sensiblement centré sur l'axe optique de l'ensemble optique formé par l'objectif 36, le miroir 37 et la mélangeur holographique 38, et que, par ailleurs, cet ensemble travaille en conjugaison de pupille. Le mélangeur holographique 38 forme, dans le plan de l'oeil, l'image de la pupille de sortie de l'objectif 36.

Dans cet exemple, le miroir associé au mélangeur holographique (qui correspond à l'un des deux miroirs 19 et 20 précédemment mentionnés) peut consister en un réflecteur holographique 40 agencé de manière à recevoir périodiquement un rayon laser émis par l'ensemble des déflecteurs Dx, Dy.

Ce réflecteur holographique 40 peut être avantageusement réalisé, lors de l'enregistrement de l'hologramme du mélangeur 38, en enregistrant localement un miroir plan holographique dans le même support photosensible.

Selon ce mode de réalisation, le réflecteur holographique est réalisé en disposant, au cours d'une étape supplémentaire, avant développement et sans démontage, un miroir 41, ce miroir 41 et le point source R étant situés de part et d'autre de la plaque 38' portant l'émulsion 42 (enregistrement monofaisceau d'un miroir plan local). Le mélangeur présente donc localement deux fonctions: assurer l'imagerie et réfléchir dans la direction appropriée le rayon test.

Comme précédemment mentionné l'invention ne se limite pas à un appareil de visualisation selon lequel l'image est obtenue par juxtaposition de deux images partielles.

Ainsi, par exemple, dans le cadre d'un système de visualisation tête haute équipant la cabine de pilotage d'un aérodyne, l'appareil pourra avantageusement faire intervenir trois mélangeurs holographiques sur lesquels sont projetées trois images partielles qui, raccordées entre elles, forment une image continue entièrement située dans le champ de vision du pilote.

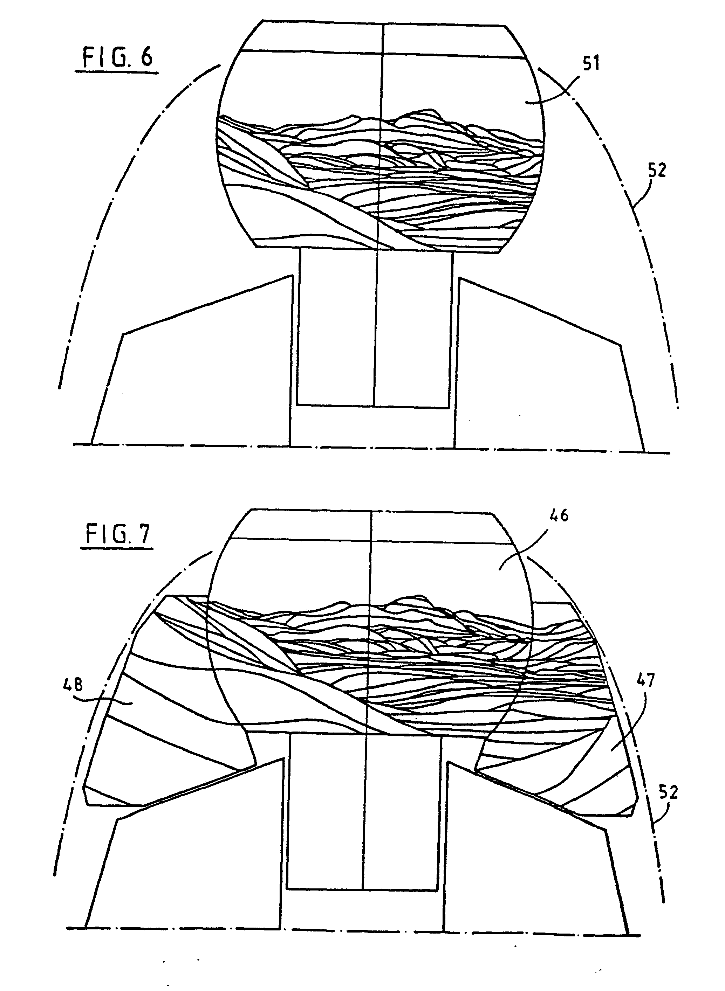

La figure 4 permet d'illustrer un exemple d'exécution d'un tel appareil. Sur cette figure, on a représenté schématiquement le pilote, vu de dessus, par son casque 43 et par ses épaules 44, 45. La position de ses yeux a été indiquée par les références $O_d$, $O_g$. Le système de visualisation tête haute équipant la cabine de pilotage fait alors intervenir, à hauteur du pare-brise, un mélangeur holographique central 46 centré sur l'axe de vision normal X'X du pilote, et deux mélangeurs holographiques latéraux 47, 48 situés de part et d'autre du mélangeur central 46 et en retrait de celui-ci.

Chacun de ces mélangeurs optiques 46, 47, 48 est associé à un ensemble "formation d'une image partielle"/"dispositif de projection"/"dispositif de détection d'orientation" tel que ceux qui se trouvent décrits sur les figures 1 et 2. L'ensemble associé au mélangeur central 46 est de préférence disposé au-dessous de celui-ci, tandis que les ensembles associés aux deux mélangeurs latéraux 47, 48 sont disposés en arrière du pilote et sont agencés de manière à émettre au-dessus des épaules 44, 45. Dans ce cas, les dispositifs de détection d'orientation associés aux mélangeurs latéraux permettant de prendre en compte les déformations éventuelles de structure de l'avion, mélangeurs et dispositifs de projection étant très éloignés.

Les dispositifs de projection associés aux deux mélangeurs latéraux 47, 48 sont réglés de manière à ce que leurs axes optiques passent par les deux yeux $O_d$, $O_g$ du pilote, tandis que le dispositif de projection associé au mélangeur central est réglé de manière à ce que son axe optique passe par le point médian M du segment $O_d$—$O_g$ reliant les deux yeux du pilote. Les trois systèmes fonctionnent alors en conjugaison de pupille (binoculaire pour le système central, monoculaire pour les deux systèmes latéraux).

Dans l'exemple représenté sur la figure 4, le mélangeur central 46 est porté par un armature comprenant deux montants latéraux 49, 50. L'invention prévoit dont une disposition permettant d'éviter que ces montants latéraux 49, 50 ne viennent partiellement masquer la vision du pilote sur les mélangeurs latéraux 47, 48 et induisent une discontinuité de l'image.

Telle qu'illustrée sur la figure 5, cette disposition consiste à faire en sorte que, d'un même côté de l'axe de vision X'X, le bord latéral intérieur 51, 52 du mélangeur latéral 47, 48 s'appuie sur la surface engendrée par les droites passant par le point médian M et le bord latéral du mélangeur 46, et que ledit montant latéral 49, 50 s'étende dans l'espace compris entre ladite surface et la surface engendrée par les droites passant par l'oeil $O_d$, $O_g$ et ledit bord intérieur 51, 52.

Les figures 6 et 7 mettant en relief l'avantage de l'appareil de visualisation précédemment décrit (figure 7) par rapport à un viseur tête haute de conception classique (figure 6) ne comprenant qu'un mélangeur central 51, dans le cas de la représentation d'un terrain synthétique.

Il est clair que dans le cas de la figure 7, la juxtaposition des trois images partielles formés sur les mélangeurs, 46, 47, 48 permet d'obtenir une vision panoramique très proche de celle que le pilote aurait lors d'une vision réelle au travers du pare-brise 52 de l'aérodyne.

On remarquera qu'au niveau de la jonction entre le mélangeur central 46 et les mélangeurs latéraux 47, 48, les courbes de niveau du terrain se raccordent sans discontinuité.

**Revendications**

1. Appareil de visualisation à champ étendu dans lequel l'image est formée par la juxtaposition d'au moins deux images partielles obtenus à l'aide de deux dispositifs de projection respectifs, ledit appareil comprenant:
—au moins deux ensembles opto-électroniques (12, 13, 7, 8) commandés par au moins un générateur de symboles électronique (14, 15) de manière à engendrer deux images partielles respectives, sensiblement complémentaires de l'image que l'on désire obtenir;
—au moins deux dispositifs de projection (5, 6, 9, 10) respectivement associés auxdits ensembles, ces deux dispositifs étant agencés de manière à projeter jointivement sur au moins un écran (1, 2) les deux images partielles, en vue de recréer, sur cet écran (1, 2), l'image complète que l'on désire obtenir;
ledit appareil étant caractérisé en ce qu'il comprend en plus:
—au moins deux dispositifs de détection (17 à 23) de la position relative et/ou de l'orientation des deux dispositifs de projection (5, 6, 9, 10) par rapport à l'écran (1, 2); et
—un processeur (16) agissant sur le générateur de symboles (14, 15) pour corriger en temps réel les images partielles en fonction des informations délivrées par lesdits dispositifs de détection (17 à 23).

2. Appareil selon la revendication 1, caractérisé en ce qu'il comprend un écran (1, 2) associé à chacun des dispositifs de projection (5, 6, 9, 10), les écrans (1, 2) étant agencés de manière à ce que les images partielles apparaissent jointivement dans le champ de vision d'un observateur.

3. Appareil selon l'une des revendications 1 et 2, caractérisé en ce que les susdits dispositifs de détection comprennent chacun une source de rayonnement (17, 18) solidaire de la structure du dispositif de projection (3, 4) et apte à émettre sur l'écran (1, 2) un faisceau rectiligne, et un réflecteur (19, 20), solidaire de l'écran (1, 2), agencé de manière à réfléchir le faisceau sur la plage sensible d'un récepteur (22, 23) conçu de manière à fournir une information relative à la position dudit faisceau sur ladite plage sensible.

4. Appareil selon l'une des revendications précédentes, caractérisé cen que les susdits ensembles opto-électroniques comprennent chacun, pour la formation des images partielles, une source de rayonnement laser (30) qui émet sur un élément diffusant (35) par l'intermédiaire d'un système opto-électronique comprenant un modulateur (34) et deux déflecteurs optiques croisés (Dx, Dy) électriquement commandables, pilotés par le générateur de symboles (30), et en ce que le ou les écrans (38) sur lequel sont projetées les images partielles consiste en un mélangeur holographique.

5. Appareil selon la revendication 4, caractérisé en ce que les réflecteurs associés aux susdits détecteurs (22, 23) consistent en des réflecteurs holographiques (40) réalisés sur les susdits mélangeurs (38).

6. Appareil selon la revendication 5, caractérisé en ce que le réflecteur holographique (40) est réalisé lors de l'enregistrement de l'hologramme du mélangeur (38), en disposant, au cours d'une étape supplémentaire, avant développement et sans démontage du mélangeur (38) un miroir (41), et en ce que ce miroir (41) et le point source (R) sont situés de part et d'autre de la plaque portant l'émulsion (enregistrement monofaisceau d'un miroir plan local), de sorte que le mélangeur présente localement deux fonctions: assurer l'imagerie et réfléchir dans la direction appropriée le rayon test.

7. Appareil selon l'une des revendications 5 et 6, caractérisé en ce que le susdit génerateur de symboles (30) est conçu de manière à ce que les susdits ensembles opto-électroniques (34, Dx, Dy, 35) émettent périodiquement un rayonnement laser sur lesdits réflecteurs holographiques (40).

8. Appareil selon l'une des revendications précédentes, plus particulièrement destiné à réaliser une image par juxtaposition de trois images partielles réalisées sur trois mélangeurs holographiques respectifs, à savoir: un mélangeur central (46) et deux mélangeurs latéraux (47, 48), au moyen de trois ensembles optiques comprenant chacun une source de rayonnement laser (30), un modulateur (34), deux déflecteurs optiques croisés (Dx, Dy) et un élément diffusant (35), caractérisé en ce que les dispositifs de projection (36, 37) associés aux deux mélangeurs latéraux (47, 48) sont réglés de manière à ce que leurs axes optiques passent par les deux yeux $(O_d, O_g)$ de l'observateur, tandis que le dispositif de projection affecté au mélangeur central (46) est réglé de manière à ce que son axe optique passe sensiblement par le point médian (M) du segment reliant les deux yeux $(O_d, O_g)$, les trois systèmes fonctionnant en conjugaison de pupille (binoculaire pour le système central, monoculaire pour les deux systèmes latéraux).

9. Appareil selon la revendication 8, caractérisé en ce que les deux mélangeurs latéraux (47, 48) sont décalés en aval du mélangeur central (46) par rapport à l'observateur.

10. Appareil selon l'une des revendications 7 et 8, dans lequel le mélangeur central (46) est porté par une armature comprenant deux montants latéraux (49, 50), caractérisé en ce que d'un même côté de l'axe de vision de l'observateur (X'X), le bord latéral intérieur (51, 52) du mélangeur latéral (47, ·48) s'appuie sur la surface engendrée par les droites passant par le point médian (M) et le bord latéral du mélangeur central (46), et en ce que ledit montant latéral (49, 50) s'étand dans l'espace compris entre ladite surface et une surface engendrée par les droites passant par l'oeil ($O_d$, $O_g$) et ledit bord intérieur (51, 52).

## Patentansprüche

1. Anzeigevorrichtung mit grossem Gesichtsfeld, deren Bild aus mindestens zwei nebeneinander angeordneten und durch zwei entsprechende Projektionsvorrichtungen erhaltenen Teilbildern besteht, mit:

—mindestens zwei optoelektronischen, von mindestens einem Erzeuger von elektronischen Symbolen (14, 15) gesteuerten Einheiten (12, 13, 7, 8) zur Erzeugung von zwei entsprechenden Teilbildern, die einander im wesentlichen ergänzend das gewünschte Bild formen;

—mindestens zwei, jeweils ein Einheiten zugeordneten, Projektionsvorrichtungen (5, 6, 9, 10), die so angelegt sind, dass sie bei beiden aneinandergefügten Teilbilder auf mindestens einen Schirm (1, 2) projezieren, um auf besagtem Schirm (1, 2) das gewünschte komplette Bild zu formen,

wobei besagte Vorrichtung dadurch gekennzeichnet ist, dass sie weiterhin aufweist:

—mindestens zwei Vorrichtungen (17 bis 23) zur Erfassung der relativen Position und/oder der Ausrichtung der beiden Projektionsvorrichtungen (5, 6, 9, 10) im Verhältnis zum Schirm (1, 2); und

—einem Rechner (16), der den Symbolerzeuger (14, 15) beaufschlagt, um die Teilbilder entsprechend den von besagten Erfassungsvorrichtungen (17 bis 23) gelieferten Information in Echtzeit zu korrigieren.

2. Vorrichtung nach Anspruch 1, dadurch gekennzeichnet, dass sie einen, jeweils einer Projektionsvorrichtung (5, 6, 9, 10) zugeordneten, Schirm (1, 2) aufweist und die Schirme (1, 2) so angeordnet sind, dass die Teilbilder aneinandergefügt im Gesichtsfeld eines Betrachters erscheinen.

3. Vorrichtung nach einem der Ansprüche 1 und 2, dadurch gekennzeichnet, dass die besagten Erfassungsvorrichtungen jeweils eine mit der Struktur der Projektionsvorrichtung (3, 4) fest verbundene Strahlenquelle (17, 18) aufweisen, die auf den Schirm (1, 2) ein gradliniges Strahlenbündel abgeben kann, sowie einen mit dem Schirm fest verbundenen Reflektor (19, 20), der so angelegt ist, dass er das Strahlenbündel auf den empfindlichen Bereich eines Empfängers (22, 23) reflektiert, der so ausgelegt ist, dass er Informationen über die Position des besagten Strahlenbündels in besagtem Bereich abgibt.

4. Vorrichtung nach einem der vorhergehenden Ansprüche, dadurch gekennzeichnet, dass die besagten optoelektronischen Einheiten jeweils, zur Erzeugung von Teilbildern, eine Laserstrahlenquelle (30) aufweisen, welche an ein Diffundierelement (35) abgibt, mittels eines optoelektronischen Systems, welches einen Modulator (34) aufweist und zwei optische gekreuzte elektrisch steuerbare Deflektoren (Dx, Dy), die vom Symbolerzeuger (30) beaufschlagt werden, und dass der Schirm oder die Schirme (38), auf welche die Teilbilder projeziert werden, aus einem holographischen Mischer besteht.

5. Vorrichtung nach Anspruch 4, dadurch gekennzeichnet, dass die den besagten Erfassern (22), 23 zugeordneten Reflektoren auf besagten Mischern (38) vorgesehene holographische Reflektoren (40) sind.

6. Vorrichtung nach Anspruch 5, dadurch gekennzeichnet, dass der holographische Reflektor (40) bei der Aufnahme des Hologramms des Mischers (38) hergestellt wird, indem man, in einem zusätzlichen Arbeitsgang, vor der Entwicklung und ohne den Mischer (38) abzubauen, einen Spiegel (41) einhaut und dass dieser Spiegel (41) und der Ausgangspunkt (R) je auf einer Seite der die Emulsion tragenden Platte angeordnet sind (einstrahlige Aufnahme eines flachen örtlichen Spiegels), sodass der Mischer örtlich zwei Aufgaben hat: das Bild zu liefern und den Teststrahl in die geeignete Richtung zu reflektieren.

7. Vorrichtung nach einem der Ansprüche 5 und 6, dadurch gekennzeichnet, dass besagter Symbolerzeuger (30) so ausgelegt, ist, dass die besagten optoelektronischen Einheiten (34, Dx, Dy, 35) regelmässig wiederkehrend Laserstrahlen an besagte holographische Reflektoren (40) senden.

8. Vorrichtung nach einem der vorhergehenden Ansprüche, die insbesondere dazu dient, ein Bild durch Nebeneinanderanordnung von drei Teilbildern zu erzeugen, die in drei jeweiligen holographischen Mischern erzeugt werden, das heisst einem zentralen Mischer (46) und zwei seitlichen Mischern (47, 48), mittels drei optischen Einheiten, die jeweils eine Laserstrahlenquelle (30), einen Modulator (34), zwei optische, gekreuzte Deflektoren (Dx, Dy) und ein Diffundierelement (35) aufweisen, dadurch gekennzeichnet, dass die den beiden seitlichen Mischern (47, 48) zugeordneten Projektionsvorrichtungen (36, 37) so eingestellt sind, dass ihre optischen Achsen durch die beiden Augen ($O_d$, $O_g$) des Betrachters verlaufen, während die dem mittleren Mischer (46) zugeordnete Projektionsvorrichtung so eingestellt ist, dass ihre optische Achse im wesentlichen durch den Mittelpunkt (M) der die beiden Augen ($O_d$, $O_g$) verbindenden Linie verläuft und die drei Systeme in Pupillenzuordnung (das mittlere beidäugig und die beiden seitlichen Systeme einäugig) funktionieren.

9. Vorrichtung nach Anspruch 8, dadurch gekennzeichnet, dass die beiden seitlichen Mischer (47, 48) unterhalb des zentralen Mischers (46) im Verhältnis zum Betrachter verschoben sind.

10. Vorrichtung nach einem der Ansprüche 7 und 8, in welcher der zentrale Mischer (46) von einem Mantel mit seitlichen Ständern (49, 50) getragen wird, dadurch gekennzeichnet, dass auf derselben Seite im Verhältnis zu Blickachse (X'X) des Betrachters der innere seitliche Rand (51, 52) des seitlichen Mischers (47, 48) sich auf die von den durch den Mittelpunkt (M) und den Seitenrand des zentralen Mischers (46) verlaufenden Geraden erzeugte Fläche stützt und dass besagter seitlicher Ständer (49, 50) sich in einen Raum zwischen besagter Fläche und einer von durch das Auge (O$_d$, O$_g$) und besagten inneren Rand (51, 52) verlaufenden Geraden gebildeten Fläche erstreckt.

## Claims

1. Extended field display apparatus in which the image is formed by the juxtapositioning of at least two partial images obtained by means of two respective projection devices, said apparatus comprising:
—at least two opto-electronic assemblies (12, 13, 7, 8) controlled by at least one electronic symbol generator (14, 15), so as to generate two respective substantially complementary partial images of the image it is desired to obtain, and
—at least two projection devices (5, 6, 9, 10) associated respectively with said assemblies, these two devices being adapted so as to jointingly project on to at least one screen (1, 2) the two partial images for recreating on this screen (1, 2) the complete image it is desired to obtain, said apparatus being characterized in that it further comprises:
at least two detection devices (17 to 23) for detecting the relative position and/or the orientation of the two projection devices (5, 6, 9, 10) with respect to the screen (1, 2); and
a processor (16) acting on the symbol generator (14, 15) for correcting the partial images in real time as a function of the information delivered by said detection devices (17 to 23).

2. Apparatus according to Claim 1, characterized in that it comprises a screen (1, 2) associated with each of the projection devices (5, 6, 9, 10), the screens (1, 2) being adapted so that the partial images appear jointingly in the visual field of an observer.

3. Apparatus according to one of Claims 1 or 2, characterized in that said detection devices each comprise a radiating source (17, 18) fixed to the structure of the projection device (3, 4) and adapted for emitting a rectilinear beam on to the screen (1, 2) and a reflector (19, 20), fixed to the screen (1, 2) and adapted so as to reflect the beam on to the sensitive area of a receiver (22, 23) designed so as to deliver information relative to the position of said beam on said sensitive area.

4. Apparatus according to one of the preceding claims, characterized in that said opto-electronic assemblies each comprise, for the formation of the partial images, a laser radiating source (30) which emits on to a diffusing element (35) via an opto-electronic system comprising a modulator (34) and two electrically controllable crossed optical deflectors (Dx, Dy) driven by the symbol generator (30), and in that the scren or the screens (38) on which the partial images are projected consists of a holographic mixer.

5. Apparatus according to Claim 4, characterized in that the reflectors associated with said detectors (22, 23) consist of holographic reflectors (40) formed on said mixers (38).

6. Apparatus according to Claim 5, characterized in that the holographic reflector (40) is formed at the time of recording the hologram of the mixer (38), by disposing a mirror (41) during an additional step, before development and without dismantling the mixer (38), and in that this mirror (41) and the source point (R) are situated on each side of the plate carrying the emulsion (monobeam recording of a local flat mirror), so that the mixer has locally two functions: image formation and reflection of the test ray in the appropriate direction.

7. Apparatus according to one of Claims 5 and 6, characterized in that said symbol generator (30) is designed so that said opto-electronic assemblies (34, Dx, Dy, 35) emit laser radiation periodically on to said holographic reflectors (40).

8. Apparatus according to one of the preceding claims, more particularly intended for forming an image by juxtapositioning three partial images formed on three respective holographic mixers, namely; a central mixer (46) and two lateral mixers (47, 48), by means of three optical assemblies each comprising a laser radiating source (30), a modulator (34), two crossed optical deflectors (Dx, Dy) and a diffusing element (35), characterized in that the projection devices (36, 37) associated with the two lateral mixers (47, 48) are set so that their optical axes pass respectively through both eyes (O$_d$, O$_g$) of the observer, whereas the projection device assigned to the central mixer (46) is adjusted so that its optical axis passes substantially through the median point (M) of the segment connecting together the two eyes, the three systems operating with pupil conjugation (biocular for the central system and monocular for the two lateral systems).

9. Apparatus according to Claim 8, characterized in that the two lateral mixers (47, 48) are offset downstream of the central mixer (46) with respect to the observer.

10. Apparatus according to one of Claims 7 and 8, wherein the central mixer (46) is carried by a frame comprising two lateral uprights (49, 50), characterized in that, on the same side of the visual axis of the observer (X'X) the inner lateral edge (51, 52) of the lateral mixer (47, 48) bears on the surface generated by the straight lines passing through the median point (M) and the lateral edge of the central mixer (46), and in that said lateral upright (49, 50) extends in the space between said surface and a surface generated by the straight lines passing through the eye (O$_d$, O$_g$) and said inner edge (51, 52).

FIG.1

FIG. 2

Dx  Dy  34

FIG. 4

47

FIG. 4

44

49

M

Og

X'

X

43

Od

46

45

50

48

FIG. 3

R

Σ_R

Σ_O

Σ'_O

Σ'_R

42

41

38'

47

Og

49

51

46

Od

50

52

FIG. 5

48

EP 0 210 088 B1

FIG. 6

FIG. 7